(19) Europäisches Patentamt
European Patent Office
Office européen des brevets

(11) Veröffentlichungsnummer: **0 162 198**
**B1**

(12) # EUROPÄISCHE PATENTSCHRIFT

(45) Veröffentlichungstag der Patentschrift: **01.06.88**

(51) Int. Cl.⁴: **H 04 L 27/14,** H 03 D 3/00

(21) Anmeldenummer: **85101974.5**

(22) Anmeldetag: **22.02.85**

(54) **Verfahren und Schaltungsanordnung zur Demodulation von frequenzumgetasteten Signalen.**

(30) Priorität: **23.03.84 DE 3410664**

(43) Veröffentlichungstag der Anmeldung:
**27.11.85 Patentblatt 85/48**

(45) Bekanntmachung des Hinweises auf die Patenterteilung:
**01.06.88 Patentblatt 88/22**

(84) Benannte Vertragsstaaten:
**FR GB IT**

(56) Entgegenhaltungen:
**EP - A - 0 046 213**
**EP - A - 0 072 393**
**EP - A - 0 091 570**

(73) Patentinhaber: **ANT Nachrichtentechnik GmbH, Gerberstrasse 33, D-7150 Backnang (DE)**

(72) Erfinder: **Ottka, Manfred, Dipl.-Ing, Stresemannstrasse 38/1, D-7150 Backnang (DE)**
Erfinder: **Seier, Udo, Dipl.-Ing, Albrechtstrasse 21, D-7140 Ludwigsburg (DE)**

**EP 0 162 198 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein Verfahren und eine Schaltungsanordnung zur Demodulation von beliebig frequenzumgetasteten Signalen.

Bei der Demodulation von frequenzmodulierten Signalen (im folgenden FM-Signale) ist es nötig, möglichst schnell die jeweilige Augenblicksfrequenz des FM-Signals zu bestimmen. Übliche Verfahren dazu beruhen auf dem Prinzip, das FM-Signal zunächst in einem Frequenzdiskriminator in ein amplitudenmoduliertes Signal umzusetzen, um dann mittels der bekannten Verfahren das erzeugte AM-Signal zu demodulieren. Bekannte Frequenzdiskriminatorschaltungen sind z.B. der Riegger-Kreis und der Ratiodetektor [vgl. (1), Seiten 303 ff.]. Eine andere Möglichkeit ist die Demodulation des FM-Signals mit Hilfe einer Phasenregelschleife. Bei diesem Verfahren wird das Modulationssignal aus der Steuerspannung des VCO gewonnen [vgl. (2), Seiten 175 ff.].

Alle diese FM-Demodulatorschaltungen detektieren innerhalb eines bestimmten Frequenzbereiches jede beliebige Signalfrequenz und besitzen einen recht hohen Grad von analogen Schaltungsteilen. Bei m-FSK-Signalen dagegen ist es nur nötig, lediglich exakt m feste Frequenzen zu erkennen. Dies ist entsprechend den bekannten Verfahren der digitalen Nachrichtenübertragung möglich, indem für jede einzelne der verwendeten Umtastfrequenzen Korrelationsfilterempfänger realisiert werden und in einer anschliessenden Logik auf die Frequenz entschieden wird, deren zugehöriges Korrelationsfilter die maximale Signalleistung liefert [vgl. (3), Seiten 181 ff.]. Diese Empfängerstruktur vereinigt Demodulation und Basisbandsignalverarbeitung, ist aber gekennzeichnet durch einen relativ hohen Schaltungsaufwand (Filterbank) und lässt sich nur schwer in eine integrierbare Schaltungsrealisierung mit möglichst hohem Anteil digitaler Signalverarbeitung überführen.

Aus der EP-A-0091570 ist ein Verfahren und eine Schaltungsanordnung zur Demodulation von frequenzmodulierten Signalen bekannt (Seiten 5, 6 und Fig. 1). In diesem bekannten Demodulationsverfahren wird das FM-Signal im Sinne des Abtasttheorems überabgetastet und analog/digital in n-Bit breite Wörter gewandelt. Zusätzliche digitale Weiterverarbeitungen dieser Wörter ermöglichen dann die Bestimmung der jeweiligen Augenblicksfrequenz des FM-Signals.

Der Erfindung liegt daher die Aufgabe zugrunde, ein Verfahren und eine Schaltungsanordnung zur Demodulation von beliebig frequenzumgetasteten Signalen anzugeben, mit dem/der eine weitestgehend digitale Signalverarbeitung möglich ist.

Die Aufgabe wird in bezug auf das Verfahren gelöst, wie im Anspruch 1 beschrieben, und in bezug auf die Anordnung gelöst, wie im Anspruch 2 beschrieben. Die Unteransprüche geben vorteilhafte Weiterbildungen an.

Anhand eines in der Zeichnung dargestellten Ausführungsbeispiels soll im folgenden die Erfindung näher erläutert werden. Dabei wird zunächst an einer allgemeinen m-FSK-Demodulatorschaltung nach dieser Erfindung die Funktionsweise beschrieben, um dann an einem speziellen Beispiel für ein 2-FSK-Signal die einzelnen Funktionsblöcke der Schaltung noch weiter zu erläutern.

Es zeigen:

Fig. 1 eine m-FSK-Demodulatorschaltung nach dieser Erfindung;

Fig. 2 eine spezielle Demodulatorschaltung nach dieser Erfindung für ein 2-FSK-Signal;

Fig. 3 ein die Funktionsweise der Schaltung nach Fig. 2 erläuterndes Impulsdiagramm mit zugehörigen Codetabellen bei fehlerfreier Übertragung des 2-FSK-Signals;

Fig. 4 Schaltungsanordnung nach Anspruch 3;

Fig. 5 Schaltungsanordnung nach Anspruch 5;

Fig. 6 Schaltungsanordnung nach Anspruch 6.

Bei der in Fig. 1 dargestellten Schaltung wird das eintreffende m-FSK-Signal im Sinne des Abtasttheorems mit dem Takt T überabgetastet und im nachfolgenden Analog-/Digital-Umsetzer ADU in n Bit breite Datenworte umgesetzt, welche dann in einen Serien-/Parallel-Umsetzer eingelesen werden. Dieser Serien-/Parallel-Umsetzer bildet aus k Worten das Bestimmungswort BW der Breite nk Bit. Ein Vergleich dieses Bestimmungswortes BW mit denen im Nur-Lese-Speicher (ROM) stehenden Sollwerten SW der Breite von ebenfalls nk Bit ergibt schliesslich das Ergebniswort EW von gleicher Bitbreite. Dabei ist das Ergebniswort gleich dem Sollwert SW, der die geringste Hammingdistanz zum Bestimmungswort BW aufweist.

Dieses so ermittelte Ergebniswort EW wird zwischengespeichert, um ihm in einer nachfolgenden Decodierlogik ein der erkannten Umtastfrequenz entsprechendes Basisbandsignal zuzuordnen. Da zu jedem Abtastwert AW ein zugehöriges Basisbandsignal bestimmt wird, ist auch das resultierende Basisbandsignal überabgetastet.

Die Wahl der Bitbreite n des Analog-/Digital-Umsetzers ADU und der Länge k des Serien-/Parallel-Umsetzers zur Ermittlung des Bestimmungswertes BW hängen ursächlich zusammen. Dies soll nach der Beschreibung der speziellen Demodulatorschaltung entsprechend Fig. 2 noch kurz weiter erläutert werden.

Bei der 2-FSK-Demodulatorschaltung in Fig. 2 wird als Analog-/Digital-Umsetzer ADU ein Komparator verwendet, welcher als 1 Bit breiter Umsetzer aufgefasst werden kann. Weiter werden die Funktionsblöcke Abtaster und Serien-/Parallel-Umsetzer ersetzt durch ein einfaches getaktetes Schieberegister, wodurch die Überabtastung als auch die direkte Zuordnung des Bestimmungswortes BW in einem Block gelingt. Dieses Bestimmungswort BW, gewonnen durch paralleles Auslesen des Schieberegisters, wird dann direkt als Adresse für das ROM verwendet, welches in der so adressierten Speicherstelle die Basisbandinformation zu der erkannten Umtastfrequenz enthält.

Allgemein gilt, dass die Art der verwendeten FSK die Wortbreite des einzusetzenden ROM's bestimmt, beispielsweise ist bei dem 2-FSK-Signal eine Breite von einem Bit ausreichend, während bei einem 8-FSK-Signal eine Breite von drei Bit nötig wäre. Allgemein gilt bei einem m-FSK-Signal für die Wortbreite WB: WB ist gleich der nächstgrösseren ganzen Zahl von ld(m), wobei ld = logarithmus dualis, der Logarithmus zur Basis zwei ist.

Die Hammingdistanz- und Decodierlogik konnte dadurch ersetzt werden, dass ein ROM der Tiefe $2^k$ Worte verwendet wird (wobei k die Länge des Schieberegisters ist) und an jede Speicherstelle die Basisbandinformation eingeschrieben wurde, die auch die Hammingdistanz zusammen mit der nachfolgenden Decodierlogik dem jeweiligen Bestimmungswort zugeordnet hätte.

Fig. 3 erläutert die Funktion der Schaltung nach Fig. 2 anhand von Impulsdiagrammen und zugehörigen Codiertabellen. Hierbei wurde ein ungestörtes 2-FSK-Signal vorausgesetzt und die Länge des Schieberegisters zu 8 Bit angenommen. Da die Überabtastung nur sehr gering ist, kann für dieses Beispiel kein optimales Empfängerverhalten erwartet werden. Prinzipiell ist festzustellen, dass bei hoher Überabtastung und feinstufiger Analog-/Digital-Umsetzung (grosse Wortbreite des ADU) das Verhalten der Schaltung sich dem eines Maximum-Likelihood-Empfängers nähert.

Selbstverständlich steigt dafür der schaltungstechnische Aufwand entsprechend. Allgemein lässt sich sagen, dass ein «breiter» Analog-/Digital-Umsetzer ADU eine geringe Länge des Serien-/Parallel-Umsetzers ermöglicht, während umgekehrt ein 1 Bit Analog-/Digital-Umsetzer ADU ein entsprechend langes Schieberegister erfordert. Letzter Fall liefert immer dann gute Ergebnisse, wenn die Überabtastung hoch genug ist, so dass sichergestellt ist, dass eine ausreichende Anzahl von Abtastworten von jeder Umtastfrequenz vorliegt.

Die Fig. 4 bis 6 zeigen die Schaltungsanordnungen entsprechend den Ansprüchen 3, 5 und 6, wobei aus der Schaltungsanordnung nach Anspruch 2 jeweils einzelne Funktionsblöcke modifiziert werden.

So ist in Fig. 4 wie im dargelegten Beispiel die Hammingdistanz und Decodierlogik von der Schaltungsanordnung nach Anspruch 2 ersetzt durch ein entsprechend programmiertes ROM. In Fig. 5 wird gemäss Anspruch 5 die Funktion dieses ROM's ersetzt durch eine entsprechende kombinatorische oder sequentielle Logikschaltung, die dem Bestimmungswort die Basisbandinformation zuordnet. Beispielsweise könnte die sequentielle Logikschaltung einen Korrelator beinhalten, der den maximalen Wert der Korrelation zwischen dem Bestimmungswort BW und einem Sollwert SW bestimmt. Entschieden würde dann auf die Basisbandinformation, die diesem Sollwert zugeordnet ist.

In Fig. 6 schliesslich ist dargestellt, wie die Schaltungsfolge Abtaster, Analog-/Digital-Umsetzer ADU, Serien-/Parallel-Umsetzer ersetzt werdfen kann durch die Reihenschaltung Analog-/Digital-Umsetzer ADU und getaktete Schieberegisteranordnung.

Literatur:

(1) Steinbuch, K; Rupprecht, W.: Nachrichtentechnik, Springer-Verlag, Berlin – Heidelberg – New York 1973.

(2) Gordner, F.M.: Phaselock Techniques, John Wiley & Sons, New York – Chichester – Brisbane – Toronto 1979.

(3) Lindsey, W.C.; Simon, M.K.: Telecommunication Systems Engineering, Prentice-Hall, Englewood Cliffs, N.J. 1973.

## Patentansprüche

1. Verfahren zur Demodulation von beliebig frequenzumgetasteten m-FSK-Signalen, wobei das frequenzumgetastete Signal im Sinne des Abtasttheorems überabgetastet wird und analog/digital in n Bit breite Wörter (AW) gewandelt wird, dadurch gekennzeichnet, dass diese n Bit breiten Wörter (AW) in einen Serien-/Parallelumsetzer eingeschrieben werden und dort aus k Wörtern ein Bestimmungswort (BW) der Breite n·k Bit gebildet wird, dass zwischen Bestimmungswörtern, bestehend aus jeweils k (k ganzzahlig und geeignet gewählt) zeitlich hintereinander liegenden Abtastwerten, und jeweils $2^{nk}$ Sollwerten (SW) die Hammingdistanz bestimmt wird, dass der Sollwert gesucht wird, der die geringste Hammingdistanz zum jeweiligen Bestimmungswort aufweist, und dass mit dem so gefundenen Sollwert dann die gesuchte Frequenz bzw. das zugehörige Basisbandwort bestimmt ist.

2. Anordnung zur Durchführung des Verfahrens nach Anspruch 1, bei dem das frequenzumgetastete Signal einer Abtasteinrichtung zugeführt ist und die Abtastwerte in einem sich anschliessenden Analog-/Digital-Umsetzer (ADU, Fig. 1) in n Bit breite Wörter (AW) umgesetzt werden, dadurch gekennzeichnet, dass diese digitalisierten Abtastwerte (AW) einem Serien-/Parallel-Umsetzer der Länge k zugeführt sind, dass am Ausgang des Serien-/Parallel-Umsetzers die Bestimmungswörter (BW) anliegen, die einer Hammingdistanz-Logik zugeführt sind, dass in einem Nur-Lese-Speicher (ROM) alle möglichen Bitkombinationen, die als Bestimmungswörter auftreten können, als Sollwerte (SW) gespeichert sind, dass der Nur-Lese-Speicher (ROM) von einem Adresszähler angesteuert wird und der Ausgang des Nur-Lese-Speichers mit der Hammingdistanz-Logik verbunden ist, dass jedes Bestimmungswort (BW) in der Hammingdistanz-Logik mit allen Sollwerten (SW) verglichen wird und die Hammingdistanz bestimmt wird, dass die Ergebniswörter (EW) dieses Vergleichs einem Zwischenspeicher zugeführt sind, in dem jeweils die minimale Hammingdistanz bestimmt wird, dass der Sollwert (SW) mit der geringsten Hammingdistanz einer Decodierlogik zugeführt ist, die ihrerseits das zu diesem Sollwert (SW) gehörende Basisbandwort abgibt und dass eine Steuerlogik vorhanden ist, die die Abtasteinrichtung, den Seriell-/Parallel-Umsetzer, den Adresszähler, die Hammingdistanzlogik, den Zwischenspeicher und die Decodierlogik steuert.

3. Anordnung zur Durchführung des Verfahrens nach Anspruch 1, bei dem das frequenzumgetastete Signal einer Abtasteinrichtung zugeführt ist und die Abtastwerte in einem sich anschliessenden Analog-/Digital-Umsetzer (ADU, Fig. 4) in n Bit breite Wörter (AW) umgesetzt werden, dadurch gekennzeichnet, dass diese digitalisierten Abtastwerte (AW) einem Serien-/Parallel-Umsetzer der Länge k zugeführt sind, dasss am Ausgang des parallel ausgelesenen Serien-/Parallel-Umsetzers die Bestimmungswörter (BW) anliegen, die direkt als Adresse für einen sich anschliessenden Nur-Lese-Speicher (ROM) verwendet sind, dass in dem Nur-Lese-Speicher (ROM) zu allen theoretisch auftretenden Bestimmungsworten (BW) (Adressen) die entsprechenden Basisbandsignale abgespeichert sind, dass am Ausgang des Nur-Lese-Speichers (ROM) das überabgetastete Basisbandsignal anliegt und dass eine Steuerlogik vorhanden ist, die die Abtasteinrichtung und den Serien-/Parallel-Umsetzer steuert.

4. Anordnung nach Anspruch 3, dadurch gekennzeichnet, dass im Falle des 2-FSK-Signals dieses 2-FSK-Signal anstatt einem Analog-/Digital-Umsetzer einem Komparator zugeführt ist, dass die Funktionsblöcke Abtastung und Serien-/Parallel-Umsetzer ersetzt sind durch ein einfaches getaktetes Schieberegister, dessen Eingang mit dem Ausgang des Komparators verbunden ist, dass am Ausgang des Schieberegisters das parallel ausgelesene Bestimmungswort (BW, Fig. 2) anliegt, welches als Adresse einem Nur-Lese-Speicher (ROM) zugeführt wird und dass in der so adressierten Speicherzelle die Basisbandinformation zu der erkannten Umtastfrequenz gespeichert ist, dass eine Steuerlogik mit dem Takteingang des Schieberegisters verbunden ist und dass am Ausgang des Nur-Lese-Speichers (ROM) das überabgetastete Basisbandsignal anliegt.

5. Anordnung nach Anspruch 3, dadurch gekennzeichnet, dass die am Ausgang des Serien-/Parallel-Umsetzers anliegenden Bestimmungswörter (BW, Fig. 5) anstatt dem Nur-Lese-Speicher (ROM, Fig. 4) einer kombinatorischen oder sequentiellen Zuordnungslogikschaltung zugeführt sind und dass diese Zuordnungslogikschaltung zu jedem auftretenden Bestimmungswort das entsprechende Basisbandsignal zugeordnet, welches dann am Ausgang der Zuordnungsschaltung als überabgetastetes Basisbandsignal ansteht.

6. Anordnung nach einem der Ansprüche 2, 3 oder 5, dadurch gekennzeichnet, dass die Schaltungsfolge Abtasteinrichtung, Analog-/Digital-Umsetzer, Serien-/Parallel-Umsetzer durch die Reihenschaltung Analog-/Digital-Umsetzer (ADU, Fig. 6) und getaktete Schieberegisteranordnung ersetzt ist, so dass am Ausgang des getakteten Schieberegisters die Bestimmungswörter (BW) anliegen, die auf eine der in den Ansprüchen 2, 3 oder 5 beschriebenen Arten weiterverarbeitet werden.

**Claims**

1. Method for the demodulation of m-FSK signals frequency-shift-keyed as desired, wherein the frequency-shift-keyed signal is overscanned in the sense of the scanning theorem and converted analog-to-digital in n bits wide words (AW), characterized thereby, that these n bits wide words (AW) are entered into a series-to-parallel converter and a determinant word (BW) of the width of n.k. bits is formed there from k words, that the Hamming distance is determined between determinant words each consisting of respective k scanning values lying one behind the other in time – k being chosen suitably and as an integral number – and respective $2^{nk}$ target values (SW), that the target value is looked for, which displays the smallest Hamming distance from the respective determinant word and that the sought frequency or the associated base band word is then determined by the thus found target value.

2. Arrangement for the performance of the method according to claim 1, in which the frequency-shift-keyed signal is fed to a scanning equipment and the scanning values are converted in a following analog-to-digital converter (ADU, fig. 1) into n bits wide words (AW), characterized thereby, that these digitalised scanning values (AW) are fed to a series-to-parallel converter of the length k, that the determinant words (BW) are present at the output of the series-to-parallel converter and fed to a Hamming distance logic system, that all possible bit combinations, which can occur as determinant words, are stored as target values (SW) in a read-only memory (ROM), that the read-only memory is addressed by an address counter and the output of the read-only memory is connected with the Hamming distance logic system, that each determinant word (BW) is compared in the Hamming distance logic system with all target values (SW) and the Hamming distance is determined, that the resultant words (EW) of this comparison are fed to an intermediate store, in which the respective minimum Hamming distance is determined each time, that the target value (SW) with the smallest Hamming distance is fed to a decoding logic system, which in its turn supplies the base band word belonging to this target value (SW), and that a control logic system is present, which controls the scanning equipment, the series-to-parallel converter, the address counter, the Hamming distance logic system, the intermediate store and the decoding logic system.

3. Arrangement for the performance of the method according to claim 1, in which the frequency-shift-keyed signal is fed to a scanning equipment and the scanning values are converted in a following analog-to-digital converter (ADU, fig. 4) into n bits wide words (AW), characterised thereby, that these digitalised scanning values (AW) are fed to a series-to-parallel converter of the length k, that the determinant words (BW) are present at the output of the series-to-parallel converter, which is read out parallelly, and are used directly as address for a following read-only memory (ROM), that the corresponding base band signals for all theoretically occurring determinant words (BW) (addresses) are stored in the read-only memory (ROM), that the overscanned base band signal is present at the output of the read-only memory (ROM), and that a control logic system is present, which controls the scanning equipment and the series-to-parallel converter.

4. Arrangement according to claim 3, characterized thereby, that in the case of a 2-FSK signal, this 2-FSK signal is fed to a comparator instead of to an analog-to-digital converter, that the function blocks of scanning and series-to-parallel converter are repleced by a simple pulsed shift register, the input of which is connected with the output of the comparator, that the determinant word (BW, fig. 2) is present at the output of the shift register, is read out parallelly and fed as address to a read-only memory (ROM) and that the base band information concerning the recognised key shift frequency is stored in the storage cell thus addressed, that a control logic system is connected with the shift pulse input of the shift register and that the overscanned base band signal is present at the output of the read-only memory (ROM).

5. Arrangement according to claim 3, characterized thereby, that the determinant words (BW, fig. 5) present at the output of the series-to-parallel converter are fed to a combinatorial or sequential correlation logic circuit instead of to the read-only memory (ROM) and that this correlation logic circuit associates each occurring determinant word with the corresponding base band signal which is then present at the output of the correlation logic circuit as overscanned base band signal.

6. Arrangement according to one of the claims 2, 3 or 5, characterized thereby, that the circuit sequence of scanning equipment, analog-to-digital converter and series-to-parallel converter is replaced by the series connection of analog-to-digital converter (ADU, fig. 6) and pulsed shift register arrangement so that the determinant words (BW), which are processed further in one of the ways described in the claims 2, 3 or 5, are present at the output of the pulsed shift register.

**Revendications**

1. Procédé pour la démodulation de signaux modulés arbitrairement par déplacement de fréquence ou signaux FSK à m valeurs, selon lequel le signal modulé par déplacement de fréquence est sur-échantillonné dans le sens du théorème d'échantillonnage et est transformé par une conversion analogique/numérique en mots (AW) d'un largeur de n bits, caractérisé en ce que ces mots (AW), d'une largeur de n bits, sont inscrits dans un convertisseur série/parallèle où un mot de définition (BW) ayant la largeur de n·k bits est formé de k mots, que la distance de Hamming est déterminée entre des mots de définition, formés chacun de k (k est un entier convenablement choisi) valeurs échantillonnées qui se suivent dans le temps et chaque fois $2^{nk}$ valeurs de consigne (SW), que la valeur de consigne présentant la plus faible distance de Hamming par rapport au mot de définiton correspondant est recherchée et que, ensuite, la fréquence recherchée, respectivement le mot correspondant de la bande de base, est déterminée à l'aide de la valeur de consigne ainsi trouvée.

2. Dispositif pour la mise en œuvre du procédé selon la revendication 1, dans lequel le signal modulé par déplacement de fréquence est appliqué à un dispositif d'échantillonnage et les valeurs échantillonnées sont transformées dans un convertisseur analogique/numérique (CNA, fig. 1) qui y fait suite, en mots (AW) d'une largeur de n bits, caractérisé en ce que ces valeurs échantillonnées (AW), numérisées, sont appliquées à un convertisseur série/parallèle de la longueur k, que la sortie du convertisseur série/parallèle présente les mots de définition (BW), lesquels sont appliqués à une logique de distance de Hamming, que toutes les combinaisons possibles de bits susceptibles de se présenter comme mots de définition sont mémorisées en tant que valeurs de consigne (SW) dans une mémoire morte (ROM), que la mémoire morte (ROM) est adressée par un compteur d'allocation et la sortie de la mémoire morte est connectée à la logique de distance de Hamming, que chaque mot de définition (BW) dans la logique de distance de Hamming est comparé avec toutes les valeurs de consigne (SW) et la distance de Hamming est déterminée, que les mots résultat (EW) de cette comparaison sont envoyés à une mémoire tampon, dans laquelle est déterminée chaque fois la distance de Hamming minimale, que la valeur de consigne (SW) avec la plus faible distance de Hamming est appliquée à une logique de décodage, laquelle délivre le mot de la bande de base correspondant à cette valeur de consigne (SW) et qu'une logique de commande est prévue pour piloter le dispositif d'échantillonnage, le convertisseur série/parallèle, le compteur d'affectation, la logique de distance de Hamming, la mémoire tampon et la logique de décodage.

3. Dispositif pour la mise en œuvre du procédé selon la revendication 1, dans lequel le signal modulé par déplacement de fréquence est appliqué à un dispositif d'échantillonnage et les valeurs échantillonnées sont transformées dans un convertisseur analogique/numérique (CNA, fig. 4) qui y fait suite, en mots (AW) d'une largeur de n bits, caractérisé en ce que ces valeurs échantillonnées (AW), numérisées, sont appliquées à un convertisseur série/parallèle de la longueur k, que les mots de définition (BW) sont présentés sur la sortie du convertisseur série/parallèle, à lecture parallèle, les mots de définition (BW) étant utilisés directement en tant qu'adresse pour une mémoire morte (ROM) prévue à la suite, que les signaux de bande de base correspondant à tous les mots de définition (BW) (adresses) théoriquement possibles sont mémorisés dans la mémoire morte (ROM), que le signal de bande de base suréchantillonné et présenté sur la sortie de la mémoire morte (ROM) et qu'une logique de commande est prévue pour piloter le dispositif d'échantillonnage et le convertisseur série/parallèle.

4. Dispositif selon la revendication 3, caractérisé en ce que, dans le cas d'un signal FSK à 2 valeurs, ce signal est appliqué à un comparateur au lieu d'un convertisseur analogique/numérique, que les blocs fonctionnels pour l'échantillonnage et la conversion série/parallèle sont remplacés par un simple registre à décalage cadencé, dont l'entrée est connectée à la sortie du comparateur, que le mot de définition (BW, fig. 2) est présenté sur la sortie du registre à décalage, à lecture parallèle, mot qui est appliqué en tant qu'adresse à une mémoire morte (ROM) et que, dans la cellule de mémoire ainsi adressée, est mémorisée l'information de la bande de base correspondant à la fréquence de déplacement détectée, qu'une logique de commande est reliée à l'entrée d'horloge du registre à décalage et que le signal de bande de base suréchantillonné est appliqué à la sortie de la mémoire morte (ROM).

5. Dispositif selon la revendication 3, caractérisé en ce que les mots de définition (BW, fig. 5), présentés sur la sortie du convertisseur série/parallèle, sont appliqués à un circuit logique d'affectation, de type combinatoire ou séquentiel, au lieu d'être appliqués à la mémoire morte (ROM, fig. 4), et que ce circuit logique d'affectation coordonne à chaque mot de définition qui apparaît le signal de bande de base correspondant, lequel est présenté alors sur la sortie du circuit d'affectation en tant que signal de bande de base suréchantillonné.

6. Dispositif selon une des revendications 2, 3 ou 5, caractérisé en ce que la suite de composants de circuit formée par le dispositif d'échantillonnage, le convertisseur analogique/numérique et le convertisseur série/parallèle, est remplacée par le montage en série d'un convertisseur analogique/numérique (CNA, fig. 6) et d'un dispositif de registre à décalage cadencé, de sorte que les mots de définition (BW) sont présentés sur la sortie du registre à décalage, ces mots étant traités ensuite selon l'une des manières indiquées dans les revendications 2, 3 ou 5.

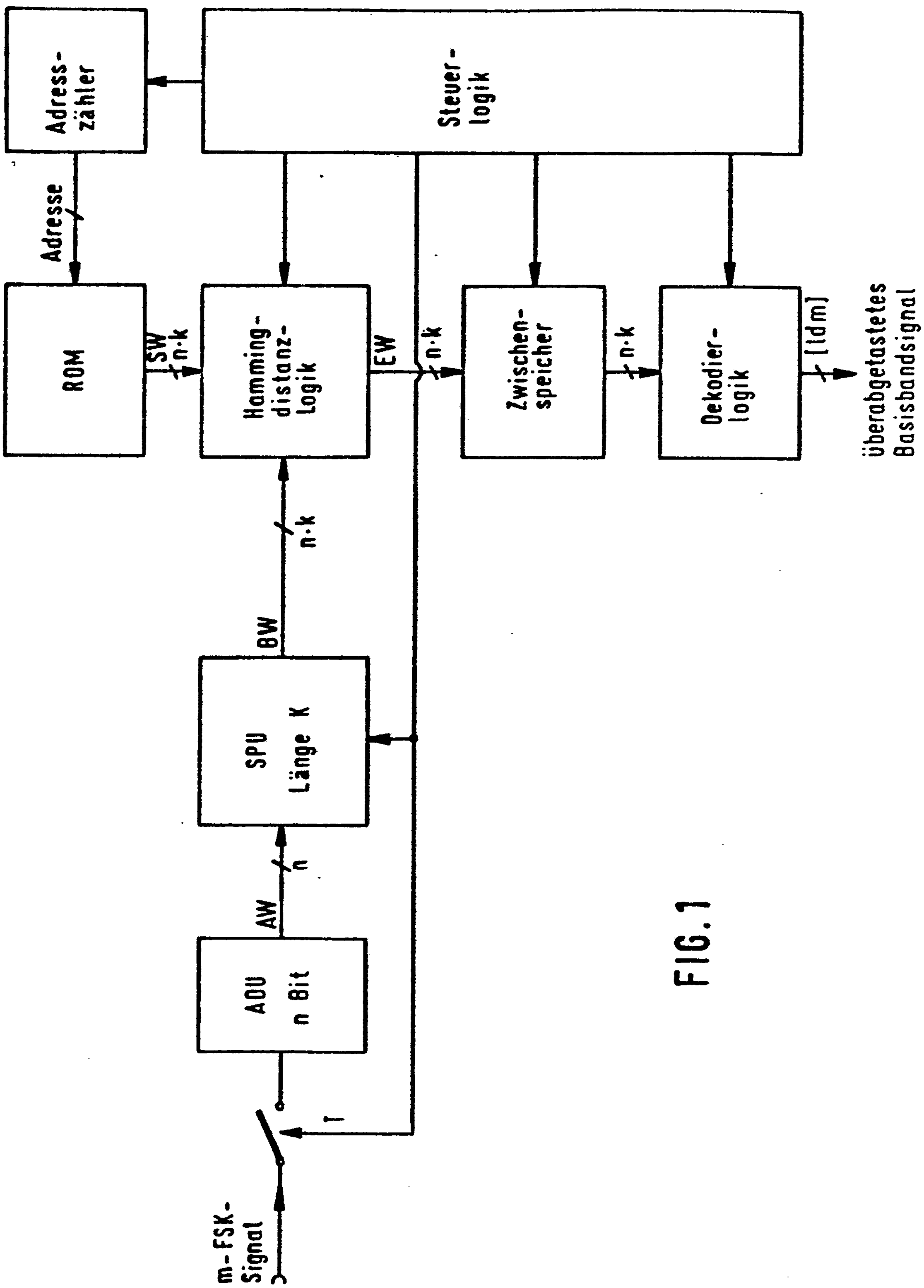
Adress-
zähler
Steuer-
logik
Adresse
ROM
SW
n·k
Hamming-
distanz-
Logik
EW
n·k
Zwischen-
speicher
n·k
Dekodier-
logik
(ld m)
überabgetastetes
Basisbandsignal
n·k
BW
SPU
Länge k
AW
n
ADU
n Bit
m-FSK-
Signal

FIG. 1

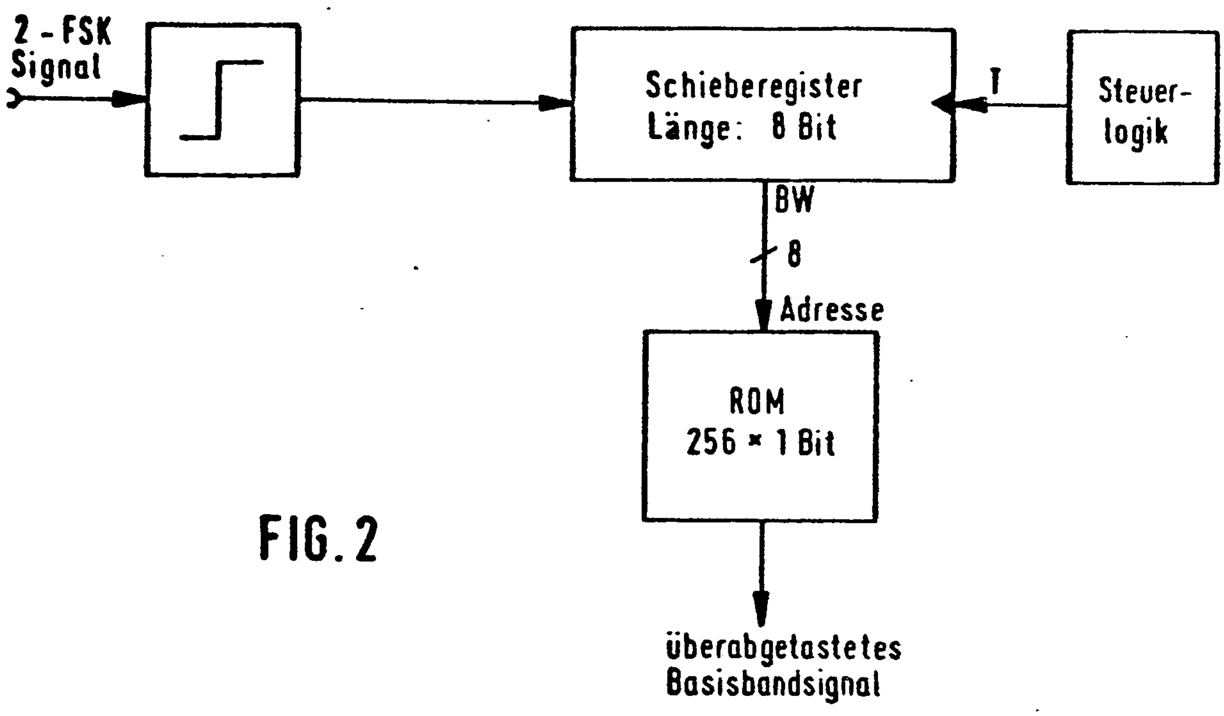

2-FSK
Signal
Schieberegister
Länge: 8 Bit
T
Steuer-
logik
BW
8
Adresse
ROM
256 × 1 Bit
überabgetastetes
Basisbandsignal


FIG. 2

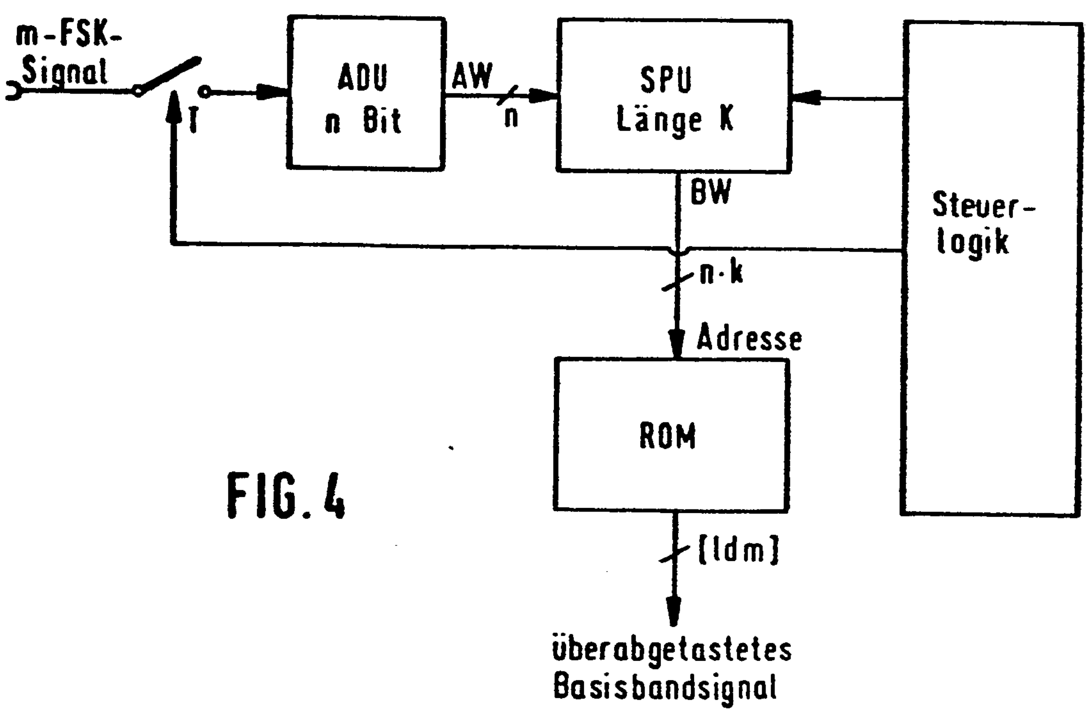

m-FSK-
Signal
T
ADU
n Bit
AW
n
SPU
Länge K
BW
n·k
Adresse
Steuer-
logik
ROM
[ldm]
überabgetastetes
Basisbandsignal


FIG. 4

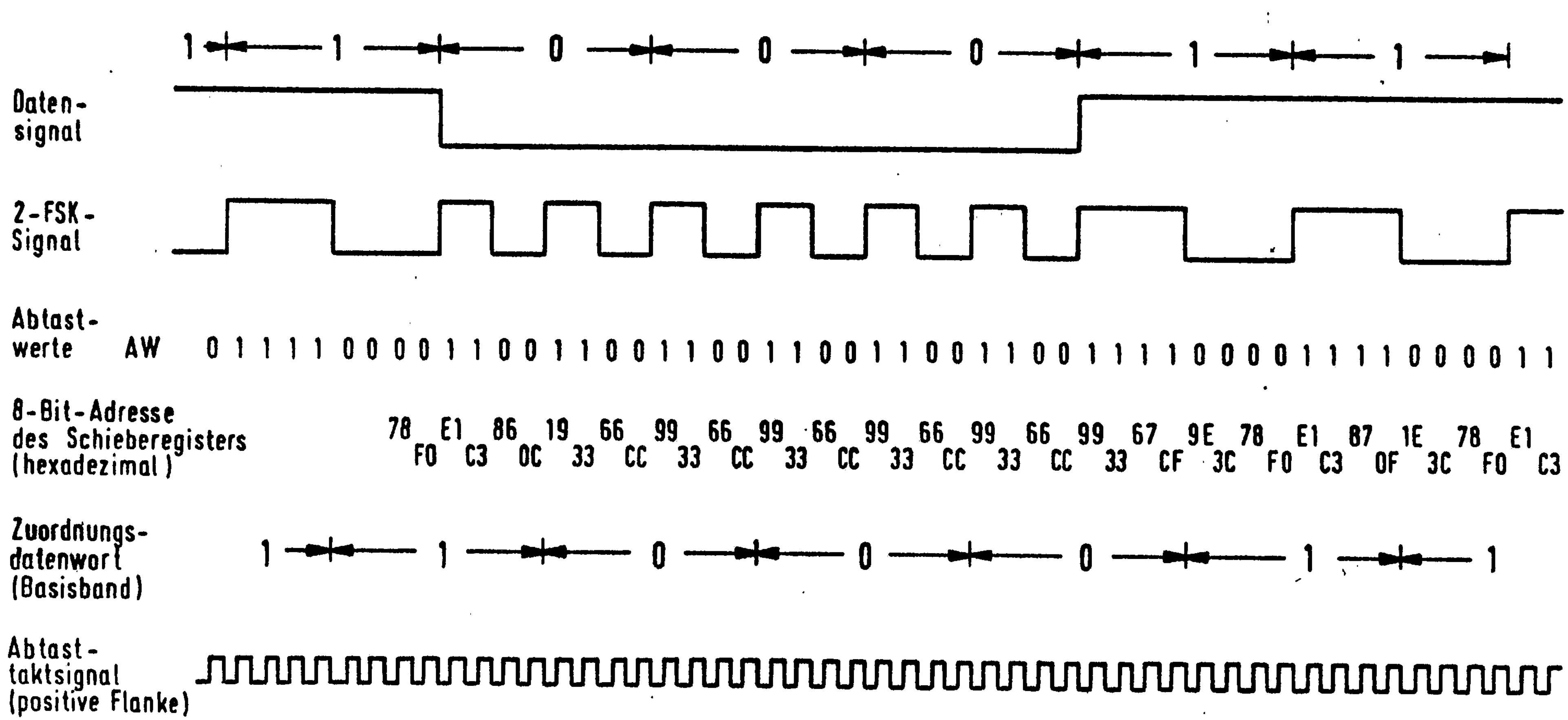


Zuordnungstabellen:
( ≙ ROM- Inhalt )

| Adr. (hexad.) | Wert | Adr. (hexad.) | Wert | Adr. (hexad.) | Wert |
|---|---|---|---|---|---|
| 0C | 1 | 9E | 1 | 19 | 0 |
| 0F | 1 | C3 | 1 | 33 | 0 |
| 1E | 1 | E1 | 1 | 66 | 0 |
| 3C | 1 | F0 | 1 | 67 | 0 |
| 78 | 1 | | | 99 | 0 |
| 86 | 1 | | | CC | 0 |
| 87 | 1 | | | CF | 0 |
| 3C | 1 | | | | |

FIG. 3

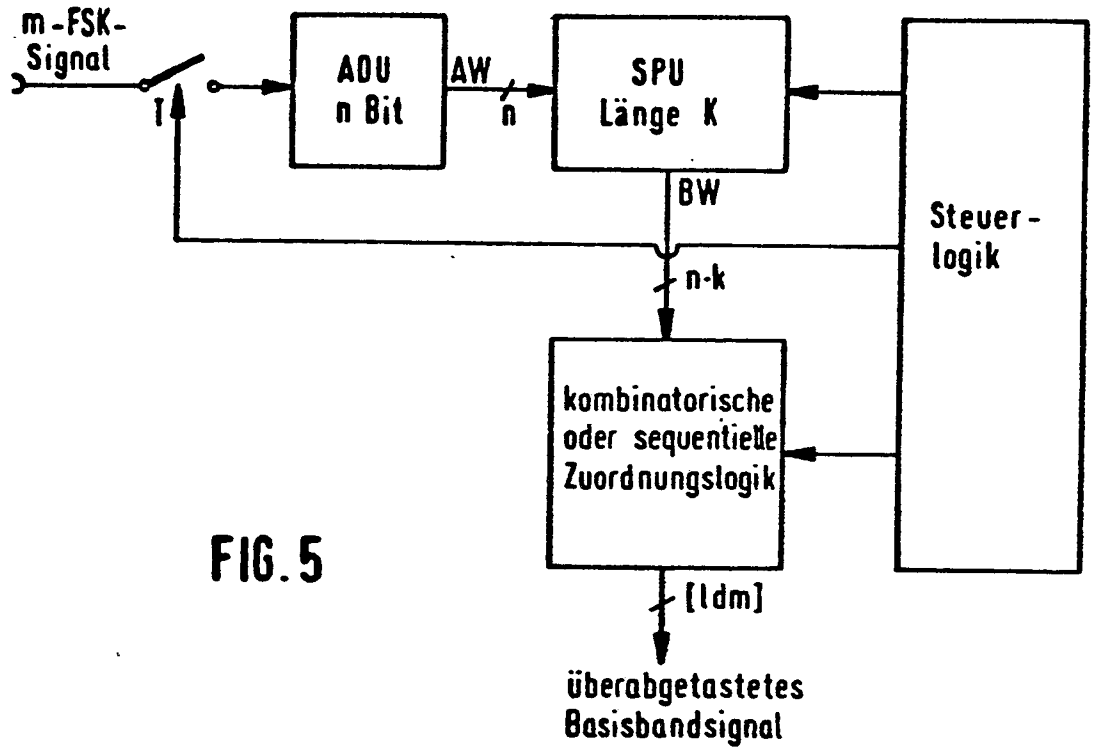
m-FSK-
Signal
T
ADU
n Bit
AW
n
SPU
Länge K
BW
n·k
Steuer-
logik
kombinatorische
oder sequentielle
Zuordnungslogik
[ldm]
überabgetastetes
Basisbandsignal

FIG.5

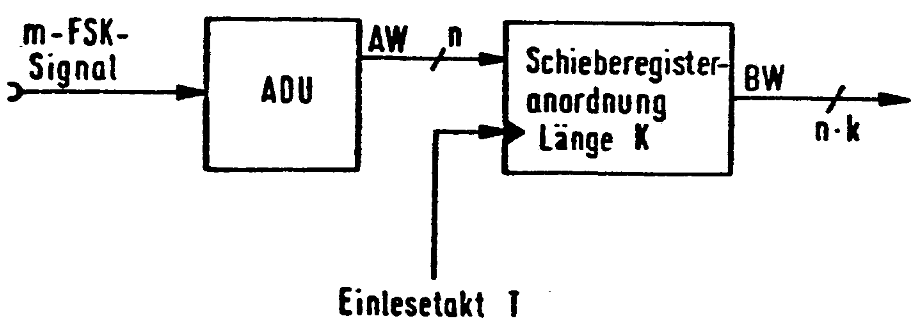
m-FSK-
Signal
ADU
AW
n
Schieberegister-
anordnung
Länge K
BW
n·k
Einlesetakt T

FIG.6